(19) Europäisches Patentamt / European Patent Office / Office européen des brevets

(11) **EP 3 242 384 A1**

(12) **EUROPEAN PATENT APPLICATION**

(43) Date of publication:
**08.11.2017 Bulletin 2017/45**

(51) Int Cl.:
*H02M 1/32* (2007.01)    *H02M 7/5387* (2007.01)

(21) Application number: **16168333.9**

(22) Date of filing: **04.05.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **ABB Technology Oy**<br>**00380 Helsinki (FI)** | (72) Inventors:<br>• **Alahuhtala, Jarno**<br>  **00380 Helsinki (FI)**<br>• **Viitanen, Tero**<br>  **00380 Helsinki (FI)**<br><br>(74) Representative: **Kolster Oy Ab**<br>  **(Salmisaarenaukio 1)**<br>  **P.O. Box 204**<br>  **00181 Helsinki (FI)** |

(54) **METHOD AND APPARATUS FOR THERMAL BALANCING OF POWER SEMICONDUCTOR COMPONENTS IN INVERTER**

(57)    The present disclosure describes a method and an apparatus for controlling a thermal balance of power semiconductor components in an inverter leg of a multi-phase inverter. The multi-phase inverter is controlled with a modulation scheme, where a switching sequence comprises at least alternative states, wherein output current flows through one power semiconductor device of the inverter leg when one alternative state is active and through another power semiconductor device of the inverter leg when the other alternative state is active. A ratio between durations of the at least two alternative states is controlled in order to balance temperature changes of the devices.

Fig. 6b

EP 3 242 384 A1

**Description**

FIELD OF THE INVENTION

The invention relates to inverters and particularly to thermal balancing of power semiconductor components in inverter legs of an inverter.

BACKGROUND INFORMATION

In electric drives, a start-up situation where an electric machine starts to speed up from a standstill to a desired speed with a large torque may induce increased thermal stresses to an inverter driving the electric machine. This may be a particularly prominent issue in an elevator application and other hoisting applications. During the start-up, the magnitude of current supplied by the inverter may be large while the frequency and the magnitude of voltage supplied by the inverter may be small. As a result, inverter legs of the inverter may each, in turns, be burdened by a large current for prolonged periods. This issue may be particularly challenging in synchronous machines in which the rotational speed of the magnetic flux induced by the inverter may be directly proportional to the rotational speed of the axle of the electric machine. Because of the large, prolonged currents at the start-up, significant local temperature changes may occur in the power semiconductor components of the inverter. Repeating temperature changes may have a negative effect on the power semiconductor components. Large temperature changes may cause mechanical strain on bonding wires of a power semiconductor component, which may lead to a failure of the component, for example.

BRIEF DISCLOSURE

An object of the present invention is to provide a method and an apparatus for implementing the method so as to alleviate the above disadvantages. The objects of the invention are achieved by a method and an arrangement which are characterized by what is stated in the independent claims. The preferred embodiments of the invention are disclosed in the dependent claims.

Temperature increases of the power semiconductors in an inverter leg may be considered to be responsive to thermal resistances and power losses (i.e. power dissipation) of power semiconductors. A significant portion of these power losses may be conducting-state power losses. During the switching sequence, the output current of the inverter leg may commutate from one power semiconductor to another, e.g. from an IGBT (insulated-gate bipolar transistor) to a diode. Thus, the conducting-state power losses of the power semiconductors are also responsive to the length of time the power semiconductors are held in the conducting state during the switching sequence.

If the inverter is controlled e.g. with a space vector modulation (SVM) scheme having two zero vectors (i.e. one zero vector during which the output current flows through one power semiconductor component and another zero vector during which the current flows through the other power semiconductor component), thermal differences between the power semiconductor components can be minimized in an inverter leg by controlling the ratio between these zero vectors in the switching sequence. By controlling the ratio between the durations of the zero vectors, the ratio between the power losses of the power semiconductors may be controlled in relation to the ratio between the thermal impedances of the power semiconductors so that the estimated temperature increases of the power semiconductors are the same.

By balancing the estimated temperature increases, the magnitude of temperature changes of an inverter leg can be lowered. As a result, life cycles of power semiconductor components in the inverter bridge can be increased.

BRIEF DESCRIPTION OF THE DRAWINGS

In the following the invention will be described in greater detail by means of preferred embodiments with reference to the attached drawings, in which

Figure 1 shows a simplified diagram of an exemplary frequency converter;
Figure 2 shows simplified, exemplary output currents and voltages of the inverter of Figure 1 in a steady state;
Figure 3 shows a simplified example of output voltages of an inverter when a motor is accelerated from zero speed;
Figure 4 shows a simplified example of the output current and output voltage of one inverter leg during acceleration;
Figures 5a and 5b show exemplary thermal impedances of time for two power semiconductor components;
Figures 6a and 6b show exemplary diagrams of a space vector modulation scheme according to the present disclosure; and
Figure 7 shows an exemplary diagram of a control system according to the present disclosure.

DETAILED DISCLOSURE

The present disclosure describes a method and an arrangement for controlling a thermal balance of power semiconductor components (i.e. power semiconductor devices) in an inverter leg of a multi-phase inverter. The inverter may be used for controlling an electric machine, for example. The electric machine may be an electric motor or a generator, for example. The power semiconductor components may be power semiconductor switches or power semiconductor rectifiers, for example. A power semiconductor switch may be an IGBT or a power MOSFET, for example. A power semiconductor rectifier may be a diode or a reverse conducting MOSFET, for example. Each inverter leg drives one output phase of the inverter. Several inverter phase legs may drive the same output phase of the inverter. Each inverter leg is configured such that, at a switching event of the inverter leg, an output current of the inverter leg commutates from a power semiconductor switch to a power semiconductor rectifier or from the power semiconductor rectifier to the power semiconductor switch.

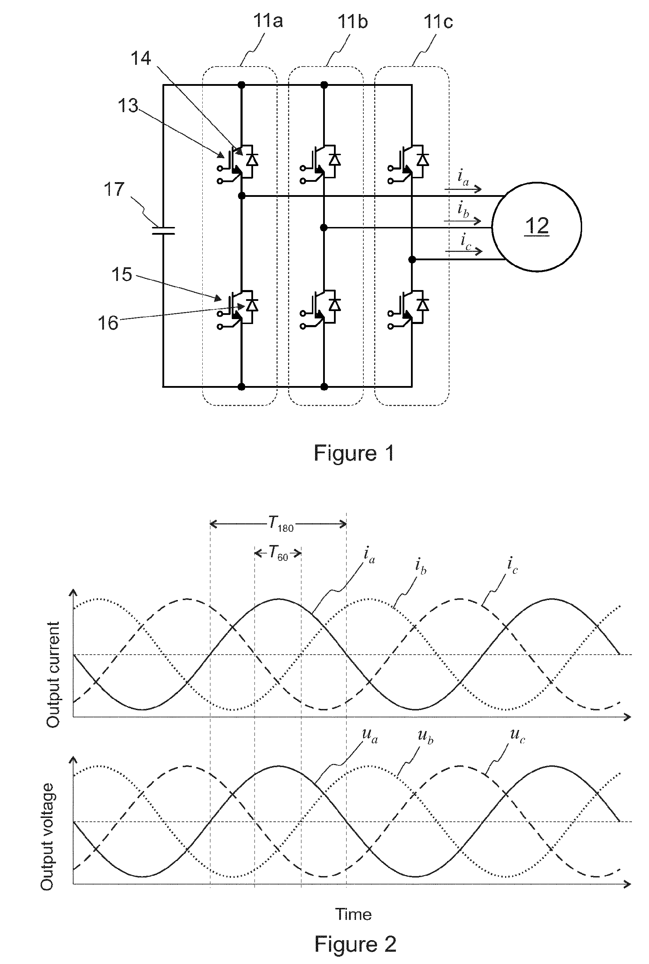

Figure 1 shows a simplified diagram of an exemplary frequency converter. The frequency converter comprises a DC link 17 and a two-level, three-phase inverter that comprises three inverter legs 11a, 11b, and 11c . The outputs of the inverter legs 11a, 11b, and 11c are connected to the phases of a three-phase electric machine 12. Each leg comprises a top half and a bottom half. The top halves each comprise a power semiconductor switch 13 coupled with an antiparallel rectifier 14. The bottom halves each comprise a power semiconductor switch 15 coupled with an antiparallel rectifier 16.

The inverter in Figure 1 is controlled such that one of the power semiconductor switches, e.g. 13 or 15, of each inverter leg is in the conducting state at a time. During a switching sequence of an inverter leg, e.g. the inverter leg 11a, the power semiconductor switch in the conducting state is turned off and the other semiconductor is turned on. Because of an inductive nature of the motor 12 as a load, an output current of the inverter leg can be considered to remain approximately constant during the switching sequence. The output current commutates from a switch to a rectifier or from the rectifier to the switch during the switching sequence.

The period of a sinusoidal output current of an inverter leg can be divided into two halves: one where the output current is positive and the other where the output current is negative. In each half of the period of the output current, the current is typically divided timewise between two power semiconductor components, between which the output current commutates during a switching sequence. For example, in Figure 1, during a positive half-period of the output current, the output current may commutate from the switch 13 of the top half of the inverter leg to the rectifier 16 of the bottom half of the inverter leg, or the other way around. In Figure 1, phase currents $i_a$, $i_b$, and $i_c$ controlled by the inverter legs 11a, 11b, and 11c are defined as positive when they flow away from the inverter towards the electric machine. Alternatively, during a negative half-period of the output current, the output current may commutate from the switch 15 of the bottom half of the inverter leg to the rectifier 14 of the top half of the inverter leg, or the other way around.

Figure 2 shows a simplified, examplary output currents and voltages of the inverter of Figure 1 in a steady state. In Figure 2, the inverter supplies the electric motor at a nominal frequency, and the output currents $i_a$, $i_b$, and $i_c$ of the inverter legs 11a, 11b, and 11c are in phase with the output voltages $u_a$, $u_b$, and $u_c$ of the inverter legs. In practice, the currents may have a phase shift with respect to the output voltages. The magnitude and direction of the phase shift may depend on the parameters of the electric machine, the supply frequency and the operating mode (e.g. a motor mode or a generator mode).

Figure 2 further shows a 180° time frame $T_{180}$ where the current $i_a$ of the inverter leg 11a is positive and distributes between the top-half power semiconductor switch 13 and the bottom-half rectifier 16 of the inverter leg 11a. In this context, a full period of a sinusoidal output current is referred to as a 360° period and a half of the length period is thus 180° ($\pi$ in radians). In the next half of the period, the current is negative and distributes between the bottom-half power semiconductor switch 15 and the top-half rectifier 14 of the inverter leg 11a.

Figure 2 also shows a narrower, 60° time frame $T_{60}$ where the magnitude of the output current $i_a$ is higher than the magnitudes of the output currents $i_b$ and $i_c$ of the inverter legs 11b and 11c. This second time frame is significant in view of the power losses of the inverter leg 11a. Depending on the modulation scheme, half of the switching losses of the active components in the inverter leg and most of the conducting-state losses of the active components may be induced during the 60° time frame $T_{60}$, regardless of the switching frequency. Because a temperature increase of a power semiconductor component is directly responsive to the power losses of the component, the second time frame $T_{60}$ also has the greatest influence on maximum temperature increase of the active components.

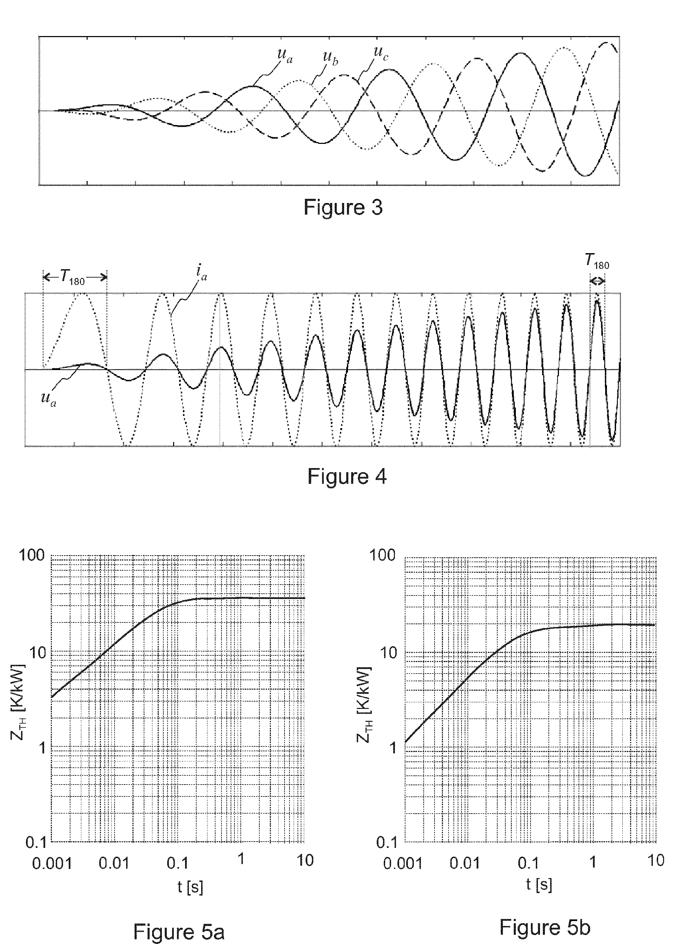

Figure 3 shows a simplified example of output phase voltages of an inverter when a motor is accelerated from zero speed. In Figure 3, filtered output phase voltages $u_a$, $u_b$, and $u_c$ generated by three inverter legs are shown. Both the magnitude and frequency of the output voltages $u_a$, $u_b$, and $u_c$ increase during the acceleration.

Figure 4 shows a simplified example of the output current $i_a$ in relation to the output voltage $u_a$ in Figure 3. In Figure 4, the 180° time frames (during which the output current is distributed between only two power semiconductor components) are significantly longer at the beginning of the acceleration than later on when the motor is starting to achieve its desired rotational speed. In the same way, the 60° time frames (during which the output current of the inverter leg is larger than the currents of the other leg) are significantly longer at the beginning of the acceleration. This may induce large temperature transients in the power semiconductors of the inverter leg. For example, the inverter legs may be in a power semiconductor module. Because of differences between the thermal expansion factors of bonding wires and power semiconductor components on the module, the large temperature transients may induce mechanical strain to the bonding wires. Mechanical stress may reduce the expected life time of the power semiconductor components. The magnitude of temperature changes may have an exponential effect on the expected life of a power semiconductor component.

The active components in the inverter legs of the inverter may have different thermal impedances. Figures 5a and 5b show exemplary thermal impedances of time for two different power semiconductor components. The thermal impedance represents the component's temperature change as a function of power loss and time. The thermal impedances of the components in Figures 5a and 5b have almost identical time constants, but the steady-state thermal resistances differ from each other. The corresponding time constants may be a result of the same material and bonding techniques used, for example. The differences in the thermal resistances may be a result of differences in the physical size. The physical size may be different because one of the components is a power semiconductor switch while the other is a power semiconductor rectifier as in the examples of Figure 1, for example. The thermal impedance of each component in Figures 5a and 5b rises to half of the steady-state thermal resistance in less than 0.1 seconds.

In order to balance temperature differences of active power semiconductor components of an inverter leg, power losses of the active components in an inverter leg can be distributed between the components in such a way that temperature increases of the components are as equal as possible. Each temperature increase may be calculated as a product of a present thermal resistance and a present power loss of the component. For example, in the case of an active power semiconductor switch, e.g. an IGBT, and an active power semiconductor rectifier, e.g. a diode, the current through the active power semiconductor components may be controlled such that the following thermal balance equation is true:

$$\Delta T_D = P_D R_{TH_D} = \Delta T_{IGBT} = P_{IGBT} R_{TH_{IGBT}} \, , \qquad (1)$$

where $\Delta T_D$ is the temperature increase of the rectifier, $P_D$ is the power loss of the rectifier, and $R_{TH_D}$ is the thermal resistance of the rectifier. Accordingly, $\Delta T_{IGBT}$ is the temperature increase of the switch, $P_{IGBT}$ is the power loss of the switch, and $R_{TH_{IGBT}}$ is the thermal resistance of the switch. By controlling the power losses $P_D$ and $P_{IGBT}$, the temperature increases $\Delta T_D$ and $\Delta T_{IGBT}$ can be equalized. Even when the temperatures of the two power semiconductor components are initially different, they can be equalized by using Equation (1).

If a modulation scheme has at least two redundant switching combinations, the redundancy may be utilized in controlling the balance between the power losses of the active components. In this context, a switching combination represents the combination of switching states of the inverter legs in an inverter. The switching state of an inverter leg is determined by the states (either conducting or non-conducting) of power semiconductor switches in the inverter leg. Further, in this context, the redundancy of switching combinations means that the modulation scheme has different switching combinations for effectively producing the same multi-phase output voltage. In other words, the redundant switching combinations each produce the same voltages between the phases of the output. The temperature variation between the power semiconductor devices may be balanced by controlling the ratio between the power losses. The ratio between the power losses may be controlled by controlling the ratio between durations of the at least two redundant switching combinations.

For example, the modulation scheme may be a space vector modulation scheme (SVM). A switching sequence of the space vector modulation scheme may comprise at least two zero vectors which represent redundant switching combinations, for example. The zero vectors are such that the output current flows through the power semiconductor switch when one zero vector is active and through the power semiconductor rectifier when the other zero vector is active. By controlling the ratio between durations of the at least two zero vectors during the switching sequence, the ratio between the power losses may be controlled to balance the temperature variation between the power semiconductor devices.

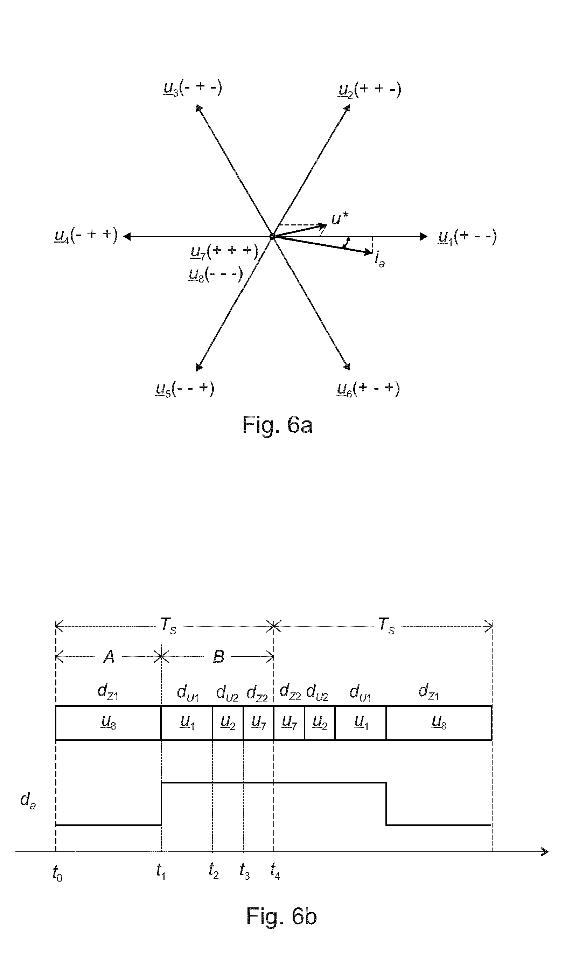

Figures 6a and 6b show exemplary diagrams of a space vector modulation scheme according to the present disclosure. Figures 6a and 6b are discussed in relation to the inverter of Figure 1.

Figure 6a shows a space vector diagram for a two-level, three-phase inverter. The space vector diagram defines eight possible space vectors $\underline{u}_1$ to $\underline{u}_8$. Each space vector represents a switching combination, i.e. a combination of switching states of the inverter legs. The pluses and minuses in parenthesis in Figure 6a show the switching states of the three inverter legs of the inverter. A plus sign indicates a "high" switching state of the inverter leg, i.e. a state where the switch in the top half of the inverter leg is in a conducting state and the switch in the bottom half of the inverter leg is in a non-conducting state. Thus, the output of the inverter leg is tied to a positive pole of the DC link. A minus sign indicates a "low" switching state of the inverter leg, i.e. a state where the switch in the bottom half of the inverter leg is in the conducting state and the switch in the top half of the inverter leg is in the non-conducting state. Thus, the output of the inverter leg is tied to a negative pole of the DC link. Figure 6a also shows an exemplary output voltage reference vector $u^*$. The inverter generates the output voltage by activating space vectors in a sequence. Figure 6a further shows an exemplary output current vector $i$ and a positive phase current component $i_a$ ($= i\cos(\varphi_i)$) of the output current $i$. The inverter leg 11a may be used for generating the phase current component $i_a$, for example.

Figure 6b shows an exemplary switching sequence of the space vector modulation scheme. In Figure 6b, a switching sequence $T_S$ is shown. The duration of the switching sequence $T_S$ is divided between durations $d_{u1}$ and $d_{u2}$ of two active vectors $\underline{u}_1$ and $\underline{u}_2$ and the durations $d_{z1}$ and $d_{z2}$ of two zero vectors $\underline{u}_7$ and $\underline{u}_8$. During the zero vector $\underline{u}_7$, the outputs of all inverter legs are tied to the positive pole of the DC link. During the zero vector $\underline{u}_8$, the outputs of all inverter legs are tied to the negative pole of the DC link. The durations $d_{z1}$ and $d_{z2}$ of the zero vectors $\underline{u}_7$ and $\underline{u}_8$ differ from each other in Figure 6b. The modulation index is relatively small. Therefore, the durations of the zero vectors are relative large in comparison with the active vectors.

Figure 6b also shows a duty cycle $d_a$ for the phase $a$ of the inverter. The switching state of the inverter leg 11a in Figure 1 may be controlled on the basis of the duty cycle $d_a$, for example. The switching sequence $T_S$ is effectively divided into two portions: a first portion A where the output current of the inverter leg 11a flows through the power semiconductor rectifier 16, and a second portion $B$ where the output current flows through the power semiconductor switch 13. The ratio between the portions A and $B$ therefore defines a ratio between the power losses of the power semiconductor switch 13 and the power semiconductor rectifier 16. At the same time, the durations $d_{z1}$ and $d_{z2}$ determine the ratio between the portions A and $B$. Thus, by controlling the ratio between the durations $d_{z1}$ and $d_{z2}$, a ratio between the power losses of the power semiconductor switch 13 and the power semiconductor rectifier 16 may be controlled such that the temperature increases of the two active components in an inverter leg are equalized. For example, the durations of the zero vectors can be weighted by coefficients $d_{z1} = d_z(1-r)/2$ and $d_{z2} = d_z(1+r)/2$, where $r$ is a weighting coefficient. By solving Equation (1), i.e. by calculating the power losses of the active components with respect to their thermal resistance such that the estimated temperature increases equate, a value for the weighting coefficient can be determined.

In order to control the ratio between durations of the at least two zero vectors, thermal characteristics for the power semiconductor switch and the power semiconductor rectifier may be determined first. The thermal characteristics may be in the form of thermal impedance functions as shown in Figures 5a and 5b, for example. The thermal characteristics may also be represented simply by predetermined constant values for thermal resistance. After the thermal characteristics have been defined, present thermal resistances of the power semiconductor switch and the power semiconductor rectifier may be determined on the basis of their thermal characteristics. Further, power loss characteristics for the switch and the rectifier may be determined. Each power loss characteristics of a power semiconductor component may represent conducting-state losses responsive to the ratio between durations of the at least two zero vectors, for example. Further, the power loss characteristics also represent switching losses.

Power losses of the rectifier and the switch may be calculated in various ways. The power loss characteristics may represent conducting state losses which may be represented as a function of the ratio between durations of the at least two zero vectors and the output current. For example, estimates of instantaneous conducting state losses of an active rectifier and an active switch of an inverter leg can be calculated as follows:

$$P_{COND_D} = V_{TH_D} i + R_{D_D} i^2,$$
$$P_{COND_{IGBT}} = V_{TH_{IGBT}} i + R_{D_{IGBT}} i^2, \tag{2}$$

where $V_{TH_D}$ and $V_{TH_{IGBT}}$ are forward voltages over the rectifier and the switch; $R_{D_D}$ and $R_{D_{IGBT}}$ are forward resistances of the rectifier and the switch; and $i$ is the output current of the inverter leg. Averaged switching power losses may be estimated as follows, for example:

$$P_{SW_D} = \frac{K_D\left(i, u_{DC}\right)}{T_S},$$
$$P_{SW_{IGBT}} = \frac{K_{IGBT}\left(i, u_{DC}\right)}{T_S}, \tag{3}$$

where $K_D$ represents the switching energy of the rectifier as a function of output current $i$ and a DC link voltage $u_{DC}$; and $K_{IGBT}$ represents the switching energy of the power switch as a function of output current $i$ and DC link voltage $u_{DC}$.

Approximations of the average power losses caused by the switching energies during a switching cycle are achieved in Equations (3) by dividing the switching energies $K_D$ and $K_{IGBT}$ with the length $T_S$ of the switching cycle.

Based on the instantaneous conducting-state losses (calculated on the basis of Equation 1, for example) and the averaged switching power losses (calculated on the basis of Equation 2, for example), the power loss characteristics may be defined as follows:

$$P_D = d_{Z_1} P_{COND_D} + P_{SW_D},$$

$$P_{IGBT} = \left(1 - d_{Z_1}\right) P_{COND_{IGBT}} + P_{SW_{IGBT}}, \tag{4}$$

where $P_{COND_D}$ is the instantaneous conducting-state power loss of the rectifier during a switching sequence; $P_{SW_D}$ is the averaged switching loss of the rectifier during $T_s$; $P_{COND_{IGBT}}$ is the instantaneous conducting state power loss of the switch; $P_{SW_{IGBT}}$ is the averaged switching loss of the switch during $T_s$; and $d_{z1}$ indicates the duration of a first zero vector during which the current flows through the rectifier.

Then, on the basis of the present thermal resistances and the power loss characteristics, the ratio between durations of the at least two zero vectors may be calculated. In the calculation, the ratio may be selected such that the estimated temperature increases of the switch and the rectifier are balanced. As described in Equation (1), each estimated temperature increase may be represented by a product of the present thermal resistance and a power loss determined on the basis of the power loss characteristics at the calculated ratio. For example, based on Equations (1) and (4), the thermal balance equation may formulated as follows:

$$\left(d_{Z_1} P_{COND_D} + P_{SW_D}\right) R_{TH_D} = \left(\left(1 - d_{Z_1}\right) P_{COND_{IGBT}} + P_{SW_{IGBT}}\right) R_{TH_{IGBT}}, \tag{5}$$

wherein $d_{z1}$ is defined in the range of $0 < d_{z1} < d_z$. Based on Equation (5), it is possible to solve the duration $d_{z1}$ of the first zero vector. If the solved value for $d_{z1}$ is out of this range, it may be set to the closest value within the range.

Alternatively, a value for the weighting coefficient r may be calculated by substituting the duration $d_{z1}$ of the first zero vector with $d_{z1} = d_z(1-r)/2$ in Equation (5):

$$\left(d_Z\left(\frac{1-r}{2}\right) P_{COND_D} + P_{SW_D}\right) R_{TH_D} =$$
$$\left(\left(1 - d_Z\left(\frac{1-r}{2}\right)\right) P_{COND_{IGBT}} + P_{SW_{IGBT}}\right) R_{TH_{IGBT}} \tag{6}$$

wherein r is defined in the range of $-1 < r < 1$. If the solved value for r is out of this range, it may be set to the closest value within the range. A control margin for the ratio between the durations of the zero vectors depends on the modulation index. With a high modulation index, the zero vectors may be active only for a short period during a switching cycle. In such a case, the control margin for balancing the temperature increases may be restricted to a reduced range. However, at start-up, the modulation index may be small and the balance may be controlled without restrictions.

Based on Equations (2), (3), and (6), a value for r that satisfies the thermal balance can be achieved by solving the following thermal balance equation:

$$\left(d_Z\left(\frac{1-r}{2}\right)\left(V_{TH_D} i + R_{D_D} i^2\right) + \frac{K_D\left(i, u_{DC}\right)}{T_S}\right) R_{TH_D} =$$
$$\left(\left(1 - d_Z\left(\frac{1-r}{2}\right)\right)\left(V_{TH_{IGBT}} i + R_{D_{IGBT}} i^2\right) + \frac{K_{IGBT}\left(i, u_{DC}\right)}{T_S}\right) R_{TH_{IGBT}}. \tag{7}$$

A method according to the present disclosure may be used for minimizing temperature changes in an inverter leg momentarily having larger power losses (e.g. during a start-up). The method works particularly well in a situation where the time constants of the thermal impedances of the active power semiconductors in the inverter leg are smaller than the duration of the 60° time frame $T_{60}$ during which the ratio of power losses of the active components may be controlled.

The ratio between the duration of the zero vectors may be predetermined with a method according to the present disclosure. For example, in one embodiment of a method according to the present disclosure, values for a ratio between zero vectors may be calculated for different angles of a voltage reference vector in advance.

Alternatively, the ratio may be updated during operation on the basis of information on present operating conditions. For example, in another embodiment, the present thermal resistances of the active components in an inverter leg may be determined during operation, and a desired ratio between the power losses of the components may be updated by solving a thermal balance equation according to the present disclosure.

The ratio between the zero vectors may also be controlled with a control system having temperature feedback on the temperatures of the active components in inverter legs. Active thermal models of the power semiconductor components may be used for determining the temperatures, for example. With an active thermal model, present transient temperatures of the components may be estimated on the basis of thermal impedances $Z_{TH}(t)$ of the components, ambient temperature (measured with a NTC sensor, for example) and approximated component-specific power losses. Based on this temperature feedback, a control system where the weighting coefficient (or the duration of the first zero vector) is the controlled quantity may be formed.

For example, in one embodiment of the method according to the present disclosure, the controlling of the ratio between durations of the at least two zero vectors may comprise determining present temperatures of the power semiconductor devices, and controlling the ratio between durations of the at least two zero vectors directly on the basis of the difference between the temperatures.

In another embodiment, the controlling of the ratio between durations of the at least two zero vectors may comprise determining thermal characteristics and present temperatures for the power semiconductor devices. The thermal characteristics may represent thermal impedance curves as functions of time, for example. On the basis of the present temperatures and the temperature characteristics, a power loss reference for the difference between the power losses of the power semiconductor switch and the power semiconductor rectifier may be calculated. The value of the power loss reference may be calculated to be such that the temperatures of the active components are balanced. The ratio between durations of the at least two zero vectors may then be controlled on the basis of the power loss reference.

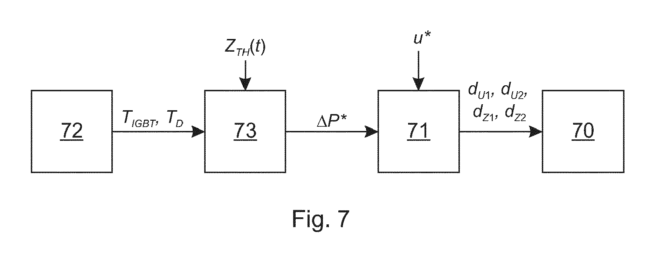

Figure 7 shows an exemplary diagram of a control system according to the present disclosure. In Figure 7, an inverter bridge 70 of a multi-phase inverter is controlled by a modulator 71. The modulator 71 may control the inverter bridge 70 on the basis of a voltage reference $u^*$, for example. The multi-phase inverter may be used for controlling an electric machine, for example. The control system may be implemented on a frequency converter comprising the multi-phase inverter, for example.

A temperature calculator 72 provides temperature information on the temperatures $T_D$ and $T_{IGBT}$ of the active switch and the rectifier in an inverter leg. The temperature calculator may estimate a junction temperature of a component on the basis of a measured ambient temperature and an estimated temperature increase calculated as a product of the present thermal resistance and the present power losses of the component. Alternatively, the temperature calculator 72 may use measured temperatures. The active components may be an IGBT and a diode of an inverter leg, for example.

A thermal balance controller 73 receives the temperature information from the temperature calculator 72. The thermal balance controller 73 further knows thermal characteristics of the active components, e.g. in the form of thermal impedance curves as functions of time. Based on the temperature information and the thermal characteristics, the thermal balance controller 73 calculates a power loss reference $\Delta P^*$ for the difference between power losses of the rectifier and the switch. The reference $\Delta P^*$ is received by the modulator 71. Based on the reference, the modulator 71 may then calculate a weighting ratio r between durations $d_{z1}$ and $d_{z1}$ of the first and second zero vector such that the weighting ratio r produces a power loss difference according to the reference $\Delta P^*$ while still fulfilling the voltage reference $u^*$. The power loss difference may be calculated, within restrictions set by the operating point, by using Equations (5) and (6), for example.

The present disclosure further describes an apparatus for controlling a thermal balance between power semiconductor components in an inverter leg of a multi-phase inverter, wherein the inverter leg is configured such that, at a switching event of the inverter leg, an output current of the inverter leg commutates from a power semiconductor device to another power semiconductor device. The apparatus may be a converter comprising the multi-phase inverter, for example.

The apparatus may comprise control means configured to control the multi-phase inverter with a modulation scheme that comprises at least two redundant switching combinations for effectively producing the same multi-phase output voltage. When one of the redundant switching combinations is active, the output current flows through one power semiconductor device, and when another redundant switching combination is active, the current flows through the other power semiconductor device. If the apparatus is the converter comprising the multi-phase inverter, the control means may be a control unit of the converter, for example. The control unit may comprise a computing device (e.g. a processor, an FPGA, or an ASIC) and a memory, for example.

In order to balance temperature changes of the power semiconductor devices, the control means may be configured to control a ratio between power losses of the power semiconductor devices. The control means may be configured to control the ratio between the power losses by controlling the ratio between durations of the at least two redundant switching combinations.

It is obvious to a person skilled in the art that the inventive concept can be implemented in various ways. The invention and its embodiments are not limited to the examples described above but may vary within the scope of the claims. Although the examples in the present disclosure mostly discuss two-level inverters, a method according to the present disclosure is applicable to all multilevel inverters with pairs of active components, between which an output current commutates during a switching sequence. Instead of zero vectors, any redundant switching combinations may be utilized.

Further, the method according to the present disclosure is not limited to space vector modulation schemes. For example, carrier-wave-based modulation approaches may be used instead. In a basic three-phase, two-level triangle-wave modulation, for example, the switching combinations produced near the peaks of the triangle-wave may be considered to represent two redundant switching combinations, since all phases are tied either to the negative pole of the DC link or to the positive pole of the DC link, and the resulting three-phase output voltage effectively has zero magnitude. The ratio between the durations of the redundant switching combinations may be controlled by controlling an offset to the carrier wave, for example.

The method according to the present disclosure is also applicable to systems where an inverter controls an electric machine operating as a generator.

**Claims**

1.   A method for controlling a thermal balance of power semiconductor components in an inverter leg of a multi-phase inverter, wherein the method comprises
controlling the multi-phase inverter with a modulation scheme, wherein the modulation scheme comprises at least two redundant switching combinations effectively producing the same multi-phase output voltage, wherein an output current of the inverter leg flows through one power semiconductor device in the inverter leg when one of the redundant switching combinations is active and through another power semiconductor device in the inverter leg when another redundant switching combination is active, and
controlling a ratio between power losses of the power semiconductor devices in order to balance temperature changes of the power semiconductor devices, wherein the ratio between the power losses is controlled by controlling the ratio between durations of the at least two redundant switching combinations.

2.   A method according to claim 1, wherein the controlling of the ratio between durations of the at least two redundant switching combinations comprises
determining thermal characteristics for the power semiconductor devices,
determining power loss characteristics for the power semiconductor devices, wherein each power loss characteristics represent conducting losses responsive to the ratio between durations of the at least two redundant switching combinations, and
determining present thermal resistances of the power semiconductor devices on the basis of their thermal characteristics, and
calculating, on the basis of the present thermal impedances and the power loss characteristics, the ratio between durations of the at least two redundant switching combinations such that estimated temperature changes of the power semiconductor devices are balanced.

3.   A method according to claim 2, wherein the power loss characteristics represent conducting-state power losses as a function of the ratio between the durations of at least two redundant switching combinations and the output current.

4.   A method according to claim 2 or 3, wherein the power loss characteristics further represent switching losses.

5.   A method according to claim 1, wherein the controlling of the ratio between durations of the at least two redundant switching combinations comprises
determining present temperatures of the power semiconductor devices, and
controlling the ratio between durations of the at least two redundant switching combinations on the basis of a difference between the temperatures.

6.   A method according to claim 1, wherein the controlling of the ratio between durations of the at least two redundant switching combinations comprises

determining thermal characteristics for the power semiconductor devices,

determining present temperatures of the power semiconductor devices,

calculating a differential power loss reference for the power semiconductor devices on the basis of the present temperatures and the temperature characteristics, and

controlling the ratio between durations of the at least two redundant switching combinations on the basis of the power loss reference.

7. A method according to claim 6, wherein the thermal characteristics represent thermal impedance curves as functions of time.

8. An apparatus for controlling a thermal balance of power semiconductor components in an inverter leg of a multi-phase inverter, wherein

the inverter leg is configured such that, at a switching event of the inverter leg, an output current of the inverter leg commutates from a power semiconductor device to another power semiconductor device, and

wherein the apparatus comprises means configured to

control the multi-phase inverter with a modulation scheme that comprises at least two redundant switching combinations for effectively producing the same multi-phase output voltage, such that, the output current flows through one power semiconductor device when one of the redundant switching combinations is active and through another power semiconductor device when another redundant switching combination is active, and

control a ratio between power losses of the power semiconductor devices in order to balance temperature changes of the power semiconductor devices, wherein the ratio between the power losses is controlled by controlling the ratio between durations of the at least two redundant switching combinations.

9. An apparatus according to claim 8, wherein the apparatus is a converter comprising a multi-phase inverter.

Figure 1

Time

Figure 2

Figure 3

Figure 4

Figure 5a

Figure 5b

$\underline{u}_3(- + -)$           $\underline{u}_2(+ + -)$

$\underline{u}_4(- + +)$     $u^*$     $\underline{u}_1(+ - -)$

$\underline{u}_7(+ + +)$
$\underline{u}_8(- - -)$       $i_a$

$\underline{u}_5(- - +)$          $\underline{u}_6(+ - +)$

## Fig. 6a

| $T_S$ | | | | | | | | $T_S$ |
|---|---|---|---|---|---|---|---|---|
| | | $A$ | | $B$ | | | | |
| $d_{Z1}$ | | $d_{U1}$ | $d_{U2}$ | $d_{Z2}$ | $d_{Z2}$ | $d_{U2}$ | $d_{U1}$ | $d_{Z1}$ |
| $\underline{u}_8$ | | $\underline{u}_1$ | $\underline{u}_2$ | $\underline{u}_7$ | $\underline{u}_7$ | $\underline{u}_2$ | $\underline{u}_1$ | $\underline{u}_8$ |

$d_a$

$t_0$      $t_1$      $t_2$     $t_3$     $t_4$

## Fig. 6b

Fig. 7

Europäisches
Patentamt

European
Patent Office

Office européen
des brevets

## EUROPEAN SEARCH REPORT

Application Number

EP 16 16 8333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | DE 10 2012 210658 A1 (BOSCH GMBH ROBERT [DE]) 24 December 2013 (2013-12-24)<br>* paragraphs [0059], [0061], [0068]; figures 1-3,5 * | 1-5,8,9<br><br>6,7 | INV.<br>H02M1/32<br>H02M7/5387 |
| X<br>A | EP 2 833 529 A1 (CONTROL TECH LTD [GB]) 4 February 2015 (2015-02-04)<br>* paragraph [0032] - paragraph [0037]; figures 9,10 * | 1-5,8,9<br><br>6,7 | |
| X<br>A | DE 10 2012 210650 A1 (BOSCH GMBH ROBERT [DE]) 24 December 2013 (2013-12-24)<br>* paragraphs [0008], [0054] - paragraph [0066]; figures 1-5 * | 1-5,8,9<br><br>6,7 | |
| X | US 2005/024902 A1 (HITI SILVA [US] ET AL) 3 February 2005 (2005-02-03)<br>* paragraph [0043] - paragraph [0046]; figure 5 * | 1,8,9 | |
| A | US 2009/319115 A1 (STANCU CONSTANTIN C [US] ET AL) 24 December 2009 (2009-12-24)<br>* paragraphs [0028], [0029] * | 2-4 | TECHNICAL FIELDS SEARCHED (IPC)<br><br>H02M |

The present search report has been drawn up for all claims

| Place of search | Date of completion of the search | Examiner |
|---|---|---|
| The Hague | 7 November 2016 | Imbernon, Lisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 8333

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | Publication date | Patent family member(s) | | Publication date |
|---|---|---|---|---|
| DE 102012210658 A1 | 24-12-2013 | NONE | | |
| EP 2833529 A1 | 04-02-2015 | CN | 104348340 A | 11-02-2015 |
| | | CN | 204119013 U | 21-01-2015 |
| | | EP | 2833529 A1 | 04-02-2015 |
| | | GB | 2516683 A | 04-02-2015 |
| | | US | 2015036400 A1 | 05-02-2015 |
| DE 102012210650 A1 | 24-12-2013 | CN | 104365013 A | 18-02-2015 |
| | | DE | 102012210650 A1 | 24-12-2013 |
| | | EP | 2865094 A2 | 29-04-2015 |
| | | JP | 6009069 B2 | 19-10-2016 |
| | | JP | 2015527031 A | 10-09-2015 |
| | | KR | 20150032531 A | 26-03-2015 |
| | | US | 2016111973 A1 | 21-04-2016 |
| | | WO | 2013189635 A2 | 27-12-2013 |
| US 2005024902 A1 | 03-02-2005 | DE | 102004036304 A1 | 03-03-2005 |
| | | JP | 4212523 B2 | 21-01-2009 |
| | | JP | 2005057995 A | 03-03-2005 |
| | | US | 2005024902 A1 | 03-02-2005 |
| US 2009319115 A1 | 24-12-2009 | CN | 101610039 A | 23-12-2009 |
| | | DE | 102009002423 A1 | 21-01-2010 |
| | | US | 2009319115 A1 | 24-12-2009 |

EPO FORM P0459

For more details about this annex : see Official Journal of the European Patent Office, No. 12/82